# EUROPÄISCHE PATENTSCHRIFT

(11) **EP 0 985 360 B1**
(45) Veröffentlichungstag und Bekanntmachung des Hinweises auf die Patenterteilung: **26.03.2003**
(21) Anmeldenummer: 99115207.5
(22) Anmeldetag: 31.07.1999
(51) Int. Cl.: A44B 11/25, B60R 22/02

(54) **Sicherheitsgurtsystem für ein Kraftfahrzeug**
Seat belt system for vehicle
Système à ceinture de véhicule

(30) Priorität: 11.09.1998 DE 19841750
(43) Veröffentlichungstag der Anmeldung: 15.03.2000
(73) Patentinhaber: Bayerische Motoren Werke Aktiengesellschaft, 80809 München (DE)
(72) Erfinder: Osendorfer, Heidi, 84416 Taufkirchen/Vils (DE); Bleicher, Stephan, 84069 Schierling (DE); Fischer, Michael, 80637 München (DE)

(56) Entgegenhaltungen:
- EP-A- 0 820 909
- DE-A- 2 531 490
- DE-A- 3 341 568
- US-A- 5 275 437

## Beschreibung

Die Erfindung betrifft ein Sicherheitsgurtsystem für ein Kraftfahrzeug, insbesondere für ein Zweirad, nach dem Oberbegriff des Hauptanspruchs.

Die DE 33 41 568 A1 beschreibt ein Sicherheitsgurtschloß mit automatischer Entriegelungsvorrichtung. Dieses Sicherheitsgurtschloß besitzt neben seiner direkt am Schloßkörper angebrachten manuellen Entriegelungseinrichtung eine automatische Entriegelungseinrichtung, bei der die manuelle Entriegelungseinrichtung über einen Bowdenzug mit einem mechanisch oder elektromechanisch ausgebildeten weiteren Öffnungsmechanismus auslösbar ist. Dieser weitere Öffnungsmechanismus kann femgesteuert auch mehrere Gurtschlösser ansteuern.

Desweiteren ist bekannt, insbesondere bei einem Zweirad, zum Fixieren einer Person auf einem Fahrzeugsitz ein Sicherheitsgurtsystem zu verwenden, das zwei voneinander unabhängige Sicherheitsgurtbänder besitzt, die mit jeweils einer Gurtschloßzunge an jeweils einem fahrzeugfesten Gurtschloß festgelegt werden können. Dabei kann jeweils eine Gurtschloßzunge durch Betätigung jeweils einer Entriegelungseinrichtung am zugehörigen Gurtschloß von diesem gelöst werden und mindestens eine mit den Entriegelungseinrichtungen beider Gurtschlösser zusammenwirkende zusätzliche Betätigungseinrichtung zum Lösen beider Gurtschloßzungen vom jeweils zugehörigen Gurtschloß ist an einer gut zugänglichen Stelle am Kraftfahrzeug vorhanden. Die Entriegelungseinrichtungen beider Gurtschlösser sind dabei über mindestens einen Seilzug mit der zusätzlichen Betätigungseinrichtung verbunden.

Allerdings tritt, bei einer Betätigung der Gurtschlösser über eine zusätzliche Betätigungseinrichtung mit Seilzügen, unter Umständen der Fall ein, daß aufgrund nicht ausgleichender Toleranzen nur ein Gurtschloß die Gurtschloßzunge freigibt. Dessen Seilzug blockiert dann aber wiederum den Betätigungshebel so, daß das zweite Gurtschloß nur noch mit dessen Entriegelungseinrichtung direkt am Gurtschloß gelöst werden kann.

Deshalb hat die Erfindung die Aufgabe, ein gattungsgemäßes Sicherheitsgurtsystem für ein Kraftfahrzeug so weiterzuentwickeln, daß durch eine zusätzliche Betätigungseinrichtung in jedem Fall beide Gurtschloßzungen von beiden Gurtschlössern gelöst werden können.

Die Aufgabe wird erfindungsgemäß mit den kennzeichnenden Merkmalen des Anspruchs 1 gelöst. Weitere Ausgestaltungen der Erfindung ergeben sich aus den Unteransprüchen.

Nach der Erfindung umfaßt die zusätzliche Betätigungseinrichtung eine Einrichtung zum Längen- und/oder Kraftausgleich, durch die die Seilzugverbindung so angesteuert wird, daß beim Betätigen der zusätzlichen Betätigungseinrichtung beide Gurtschlösser gelöst werden, unabhängig davon, ob für die Entriegelungseinrichtungen jeweils unterschiedlich große Lösewege und/oder Lösekräfte aufgebracht werden müssen. Eine solche Einrichtung zum Längen- und/oder Kraftausgleich zwischen zwei Seilzügen oder beiden Enden eines Seilzugs bewirkt vorteilhafterweise, daß die zur Verfügung stehende Kraft und/oder der zur Verfügung stehende Weg zum Auslösen beider Gurtschlösser automatisch nach dem jeweiligen Kraftund/oder Wegbedarf der einzelnen Entriegelungseinrichtungen der Gurtschlösser auf diese verteilt werden. Ist also ein Gurtschloß bereits entriegelt, so blockiert dessen Seilzug nicht die zusätzliche Betätigungseinrichtung, sondern es findet ein Längen- und/oder Kraftausgleich auf den anderen Seilzug statt, bis das durch diesen angesteuerte Gurtschloß ebenfalls die Gurtschloßzunge freigibt.

Bei einer vorteilhaften Ausführung der Erfindung umfaßt die zusätzliche Betätigungseinrichtung einen Betätigungshebel, durch dessen Auslenkung ein Seilzug bewegt wird, von dem jeweils ein Ende mit einer Entriegelungseinrichtung verbunden ist und der als Einrichtung zum Längen- und/oder Kraftausgleich in der zusätzlichen Betätigungseinrichtung über eine in einem Verbindungsschlitten drehbar gelagerte Rolle geführt ist, wobei der Verbindungsschlitten die Auslenkbewegung des Betätigungshebels auf die Rolle überträgt.

Die Rolle gleicht so Längen- und/oder Kraftunterschiede beim Entriegeln der beiden Gurtschlösser aus, indem der um diese herum gelegte Seilzug durch eine Abwälzbewegung seine wirksame Länge sowohl für das eine als auch für das andere Gurtschloß je nach Bedarf einsetzen kann.

Bei einer weiteren vorteilhaften Ausführungsform der Erfindung umfaßt die zusätzliche Betätigungseinrichtung einen Betätigungshebel, durch dessen Auslenkung zwei Seilzüge bewegt werden, von denen jeweils einer von der zusätzlichen Betätigungseinrichtung zu einer Entriegelungseinrichtung führt und deren beide entriegelungseinrichtungsseitige Enden als Einrichtung zum Längen- und/oder Kraftausgleich in der zusätzlichen Betätigungseinrichtung über ein Gelenkstück verbunden sind, das mindestens schwenkbeweglich mit dem Betätigungshebel verbunden ist.

Werden zur Ansteuerung der beiden Gurtschlösser zwei Seilzüge verwendet, so sind diese vorteilhafterweise zum Längen- und/oder Kraftausgleich an einem Gelenkstück angebracht, das wiederum schwenkbeweglich mit dem Betätigungshebel verbunden ist. So entsteht ein wippenartiges Hebelsystem, das auf einfache Weise jedem Seilzug die Länge und/oder die Kraft vermittelt, die dieser zum Öffnen des Gurtschlosses benötigt, selbst wenn der andere Seilzug durch das offene Gurtschloß bereits blockiert wird.

Eine bevorzugte Ausführungsform der Erfindung ist dadurch gekennzeichnet, daß die zusätzliche Betätigungseinrichtung eine Rückstellfeder umfaßt, wobei der Verbindungsschlitten oder das Gelenkstück durch den Betätigungshebel entgegen der Kraft der Rückstellfeder ausgelenkt werden. Eine solche Rückstellfeder bewirkt vorteilhafterweise, daß sich die Entriegelungseinrichtungen der Gurtschlösser nach dem Entriegeln wieder in ihre Verriegelposition zurückstellen, da die zusätzliche Betätigungseinrichtung ebenfalls durch die Wirkung der Rückstellfeder in eine Position zurückgestellt wird, die der bei verriegelten Gurtschlössern entspricht.

Bei einer weiteren bevorzugten Ausführung der Erfindung ist zwischen dem Betätigungshebel und den Entriegelungseinrichtungen der Gurtschlösser eine weitere Einrichtung zum Längen- und/oder Kraftausgleich eingebaut. Diese besteht aus mindestens einem auf Zug elastischen Element, insbesondere einer Zugfeder. Diese weitere Einrichtung zum Längen- und/oder Kraftausgleich hat den Vorteil, daß die Bedienbarkeit sanfter eingestellt werden kann und Kraftspitzen ausgeglichen werden.

Zwei bevorzugte Ausführungsbeispiele der Erfindung sind in der nachfolgenden Beschreibung mit der zugehörigen Zeichnung dargestellt. Es zeigen:
- Figur 1: ein Zweirad in einer schematischen Seitenansicht mit einem erfindungsgemäßen Sicherheitsgurtsystem,
- Figur 2: eine zusätzliche Betätigungseinrichtung in räumlicher Darstellung, teilweise aufgeschnitten,
- Figur 3: dieselbe zusätzliche Betätigungseinrichtung in Seitenansicht, ebenfalls mit Teilschnitten,
- Figur 4: eine räumliche Darstellung mit Teilschnitten einer anderen Ausführungsform der zusätzlichen Betätigungseinrichtung entsprechend der Erfindung.

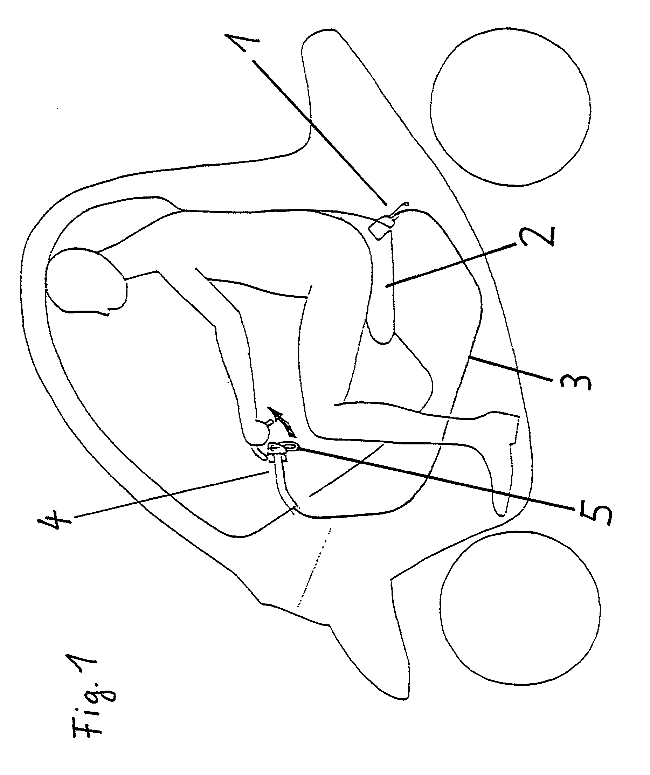

Figur 1 zeigt einen Teil eines Sicherheitsgurtsystems an einem Zweirad. Sicherheitsgurte und ihre Aufrolleinrichtungen sind nicht dargestellt, da diese aus dem Stand der Technik bekannt sind, insbesondere aus DE 19 629 878 A1, die einen Zweiradfahrer zeigt, der mit zwei Sicherheitsgurten auf dem Fahrzeugsitz fixiert ist, wobei jedes Sicherheitsgurtband über eine Gurtschloßzunge in jeweils einem Gurtschloß links und rechts neben dem Fahrersitz festgelegt werden kann. Figur 1 zeigt ein Gurtschloß 1 auf der linken Seite eines Fahrzeugsitzes 2, durch einen Seilzug 3 verbunden mit einer zusätzlichen Betätigungseinrichtung 4 an einer Lenkvorrichtung des Zweirads. Die zusätzliche Betätigungseinrichtung 4 besitzt eine in dieser Figur nicht sichtbare Einrichtung zum Längen- und/oder Kraftausgleich, die mit einem Betätigungshebel 5 durch den Fahrer betätigt wird und dabei die Seilzüge 3 zu den Gurtschlössern 1 so beaufschlagt, wie deren Entriegelungseinrichtungen zum Entriegeln der Gurtschloßzungen Kraft bzw. Weg benötigen. Dazu findet zwischen den beiden Entriegelungseinrichtungen der Gurtschlösser 1 über die zusätzliche Betätigungseinrichtung ein Längen- und/oder Kraftausgleich statt.

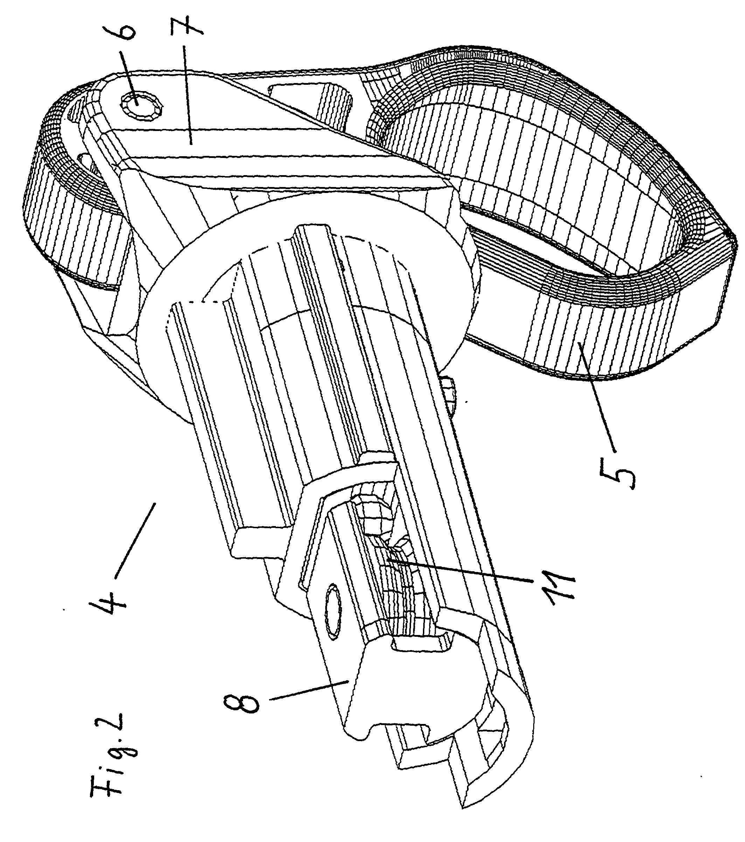

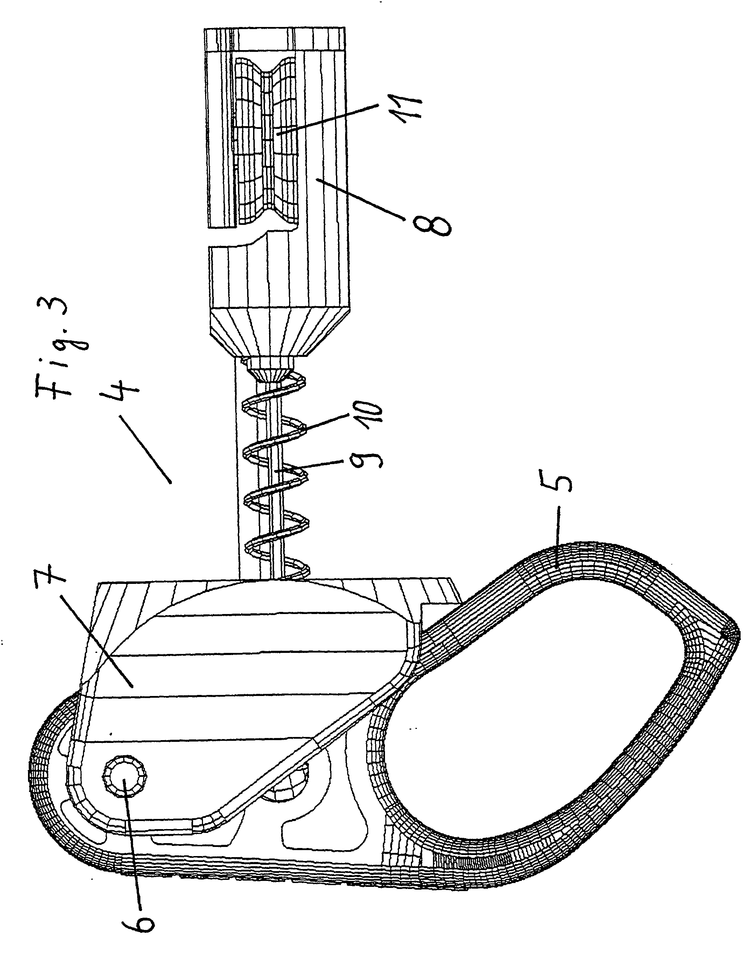

Figur 2 und Figur 3 zeigen den Betätigungshebel 5 der zusätzlichen Betätigungseinrichtung, der fahrzeugfest um eine Achse 6 schwenkbar in einer Lagereinrichtung 7 angebracht ist. In der Lagereinrichtung 7 ist längsverschieblich ein Verbindungsschlitten 8 gelagert, dessen Längsverschiebung durch die Bewegung des Betätigungshebels 5 erreicht wird. Dazu ist der Betätigungshebel 5 mit dem Verbindungsschlitten 8 durch einen weiteren Seilzug 9 verbunden, wobei eine Rückstellfeder 10 den Verbindungsschlitten 8 an der Lagereinrichtung 7 abstützt. Dies dient dazu, den Verbindungsschlitten 8 nach seiner Längsbewegung wieder in seine Ausgangslage zurückzustellen, in der die Gurtschlösser 1 ihre Verriegelungsposition einnehmen. Bei dieser Ausführungsform der zusätzlichen Betätigungseinrichtung 4 ist ein in diesen Figuren nicht gezeichneter Seilzug entsprechend dem Seilzug 3 aus Figur 1 mit jeweils einem seiner Enden mit jeweils einem Gurtschloß 1 verbunden. Der in diesen Figuren nicht gezeichnete Seilzug 3 ist um eine in dem Verbindungsschlitten 8 drehbar gelagerte Rolle 11 herum geführt und kann dadurch über den Betätigungshebel 5 durch lineare Bewegung des Verbindungsschlittens 8 beide Gurtschlösser 1 entriegeln. Dabei bewirkt die drehbare Rolle 11 den Längen- und/oder Kraftausgleich zwischen den beiden Enden des nicht gezeichneten Seilzugs 3. Ist nämlich ein Gurtschloß 1 bereits entriegelt und blockiert die weitere Bewegung dieses Endes des Seilzugs 3, so wälzt der Seilzug 3 auf der sich dadurch drehenden Rolle 11 bei weiterer linearer Bewegung des Verbindungsschlittens 8 ab, was dazu führt, daß noch Bewegungsweg und Kraft zum Entriegeln des zweiten Gurtschlosses 1 zur Verfügung steht.

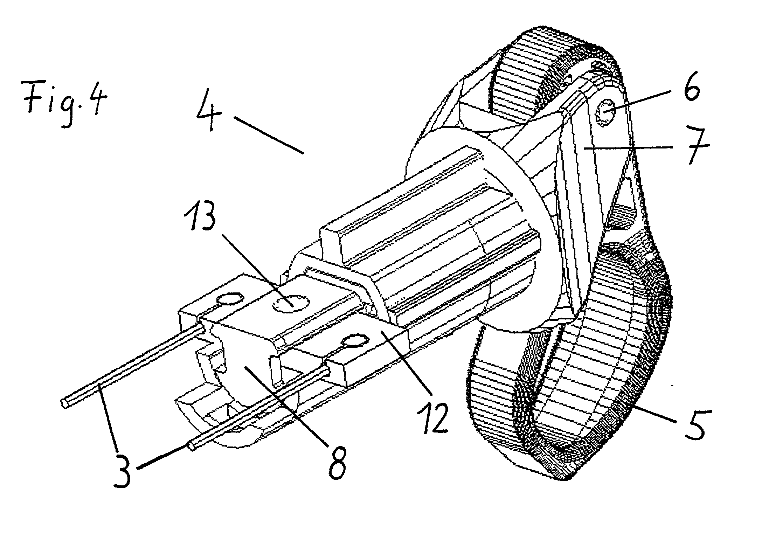

Figur 4 zeigt eine weitere Form eines Längen- und/oder Kraftausgleichs in der zusätzlichen Betätigungseinrichtung 4. Hier ist jede Entriegelungseinrichtung der Gurtschlösser 1 über jeweils ein Ende zweier Seilzüge 3 mit der zusätzlichen Betätigungseinrichtung 4 verbunden. Dazu ist das jeweilige andere Ende der Seilzüge 3 an einem Gelenkstück 12 angebracht, das wiederum schwenkbar über eine weitere Achse 13 an dem Verbindungsschlitten 8 befestigt ist. Dadurch sind die beiden Seilzüge 3 und damit die Entriegelungseinrichtungen beider Gurtschlösser 1 über die zusätzliche Betätigungseinrichtung 4 durch einen Längen- und/oder Kraftausgleich verbunden, der ähnlich einer Wippe den unterschiedlichen Kraft- bzw. Wegbedarf der Seilzüge 3 ausgleicht. Ist ein Seilzug 3 blockiert, da das durch diesen angesteuerte Gurtschloß 1 bereits entriegelt ist, dreht sich bei weiterer linearer Bewegung des Verbindungsschlittens 8 das Gelenkstück 12 um die weitere Achse 13 und verstärkt dadurch die Kraft und den Weg des Seilzugs 3, dessen Gurtschloß 1 noch nicht entriegelt ist, bis zu dessen Entriegelung.

## Patentansprüche

1. Sicherheitsgurtsystem für ein Kraftfahrzeug, insbesondere für ein Zweirad, zum Fixieren einer Person auf einem Fahrzeugsitz (2), mit zwei voneinander unabhängigen Sicherheitsgurtbändern, die mit jeweils einer Gurtschloßzunge an jeweils einem fahrzeugfesten Gurtschloß (1) festgelegt werden können, wobei jeweils eine Gurtschloßzunge durch Betätigen jeweils einer Entriegelungseinrichtung am zugehörigen Gurtschloß (1) von diesem gelöst werden kann, **dadurch gekennzeichnet, daß** mindestens eine mit den Entriegelungseinrichtungen beider Gurtschlösser (1) zusammenwirkende zusätzliche Betätigungseinrichtung (4) zum Lösen beider Gurtschloßzungen vom jeweils zugehörigen Gurtschloß (1) an einer gut zugänglichen Stelle am Kraftfahrzeug vorhanden ist, wobei die Entriegelungseinrichtungen beider Gurtschlösser (1) über mindestens einen Seilzug (3) mit der zusätzlichen Betätigungseinrichtung (4) verbunden sind, und die zusätzliche Betätigungseinrichtung (4) eine Einrichtung zum Längenund/oder Kraftausgleich umfaßt, durch die die Seilzugverbindung so angesteuert wird, daß beim Betätigen der zusätzlichen Betätigungseinrichtung (4) beide Gurtschlösser (1) gelöst werden, unabhängig davon, daß für die Entriegelungseinrichtungen jeweils unterschiedlich große Lösewege und/oder Lösekräfte aufgebracht werden müssen.

2. Sicherheitsgurtsystem für ein Kraftfahrzeug nach Anspruch 1, **dadurch gekennzeichnet, daß** die zusätzliche Betätigungseinrichtung (4) einen Betätigungshebel (5) umfaßt, durch dessen Auslenkung ein Seilzug (3) bewegt wird, von dem jeweils ein Ende mit einer Entriegelungseinrichtung verbunden ist und der als Einrichtung zum Längen- und/oder Kraftausgleich in der zusätzlichen Betätigungseinrichtung (4) über eine in einem Verbindungsschlitten (8) drehbar gelagerte Rolle (11) geführt ist, wobei der Verbindungsschlitten (8) die Auslenkbewegung des Betätigungshebels (5) auf die Rolle (11) überträgt.

3. Sicherheitsgurtsystem für ein Kraftfahrzeug nach Anspruch 1, **dadurch gekennzeichnet, daß** die zusätzliche Betätigungseinrichtung (4) einen Betätigungshebel (5) umfaßt, durch dessen Auslenkung zwei Seilzüge (3) bewegt werden, von denen jeweils einer von der zusätzlichen Betätigungseinrichtung (4) zu einer Entriegelungseinrichtung führt und deren jeweilige entriegelungseinrichtungsseitige Enden, als Einrichtung zum Längen- und/oder Kraftausgleich, in der zusätzlichen Betätigungseinrichtung (4) über ein Gelenkstück (12) verbunden sind, das mindestens schwenkbeweglich durch den Betätigungshebel (5) mindestens linear ausgelenkt werden kann.

4. Sicherheitsgurtsystem für ein Kraftfahrzeug nach einem der Ansprüche 1 bis 3, **dadurch gekennzeichnet, daß** die zusätzliche Betätigungseinrichtung (4) eine Rückstellfeder (10) umfaßt, wobei der Verbindungsschlitten (8) oder das Gelenkstück (12) durch den Betätigungshebel (5) entgegen der Kraft der Rückstellfeder (10) ausgelenkt werden.

5. Sicherheitsgurtsystem für ein Kraftfahrzeug nach einem der Ansprüche 1 bis 4, **dadurch gekennzeichnet, daß** zwischen dem Betätigungshebel (5) und der Entriegelungseinrichtung der Gurtschlösser (1) eine weitere Einrichtung zum Längen- und/oder Kraftausgleich eingebaut ist, die aus mindestens einem auf Zug elastischen Element, insbesondere einer Zugfeder, besteht.

## Revendications

1. Système à ceinture de sécurité pour un véhicule, notamment pour motocyclette, servant à fixer une personne sur un siège (2) du véhicule, comportant deux rubans de ceinture de sécurité, indépendants, pouvant être fixés chacun par une languette de serrure de ceinture à une serrure de ceinture (1) correspondante, solidaire du véhicule, chaque languette pouvant être dégagée de la serrure correspondante par actionnement d'un dispositif de déverrouillage équipant cette serrure (1),
**caractérisé en ce qu'**
- au moins un dispositif supplémentaire d'actionnement (4), coopérant avec les dispositifs de déverrouillage des deux serrures de ceinture (1) pour libérer de celles-ci les languettes de serrure correspondantes, est monté sur le véhicule en un endroit bien accessible,
- les dispositifs de déverrouillage des deux serrures (1) sont reliés par au moins un câble de traction (3) au dispositif supplémentaire d'actionnement (4), et
- le dispositif supplémentaire d'actionnement (4) comprend un dispositif pour compenser la longueur et/ou la force, par lequel la liaison par câbles de traction est commandée de manière qu'en actionnant le dispositif supplémentaire d'actionnement (4) les deux serrures (1) sont dégagées, indépendamment du fait que des déplacements et/ou des forces différentes doivent être appliquées aux dispositifs de déverrouillage.

2. Système à ceinture de sécurité selon la revendication 1,
**caractérisé en ce que**
le dispositif supplémentaire d'actionnement (4) comprend un levier de manoeuvre (5) dont le mouvement déplace un câble de traction (3) dont une extrémité est reliée à un dispositif de déverrouillage et qui, en tant que dispositif compensateur de longueur et/ou de force passe, dans le dispositif supplémentaire d'actionnement (4) sur un rouleau (11) monté tournant dans un coulisseau de liaison (8) qui transmet le mouvement du levier de manoeuvre (5) au rouleau (11).

3. Système à ceinture de sécurité selon la revendication 1,
**caractérisé en ce que**
le dispositif supplémentaire d'actionnement (4) comprend un levier de manoeuvre (5) dont le mouvement déplace deux câbles de traction (3) allant chacun du dispositif supplémentaire d'actionnement (4) à un dispositif de déverrouillage correspondant, les extrémités de ces câbles situées sur les dispositifs de déverrouillage étant, en tant que dispositif de compensation de longueur et/ou de force, reliées dans le dispositif supplémentaire d'actionnement (4) par une pièce d'articulation (12) pouvant au moins basculer et que le levier de manoeuvre (5) peut déplacer au moins linéairement.

4. Système de ceinture de sécurité selon l'une quelconque des revendications 1 à 3,
**caractérisé en ce que**
le dispositif supplémentaire d'actionnement (4) comprend un ressort de rappel (10), et le coulisseau de liaison (8) ou la pièce d'articulation (12) sont déclenchés par le levier de manoeuvre (5) contre la force du ressort (10).

5. Système de ceinture de sécurité selon l'une quelconque des revendications 1 à 4,
**caractérisé en ce qu'**
entre le levier de manoeuvre (5) et le dispositif de déverrouillage des serrures de ceinture (1) est monté un autre dispositif de compensation de longueur et/ou de force, composé d'au moins un élément élastique en traction, en particulier un ressort de traction.

## Claims

1. A seat-belt system for a motor vehicle, especially a two-wheeled vehicle, for securing a person on a vehicle seat (2), comprising two independent seat-belt straps each adapted to be fastened by a belt tongue to a respective lock (1) attached to the vehicle, wherein each tongue can be released from the respective lock (1) by operating a release device, **characterised in that** at least one additional actuating device (4) co-operating with the devices for releasing the two belt locks (1) and adapted to release both tongues from the respective locks (1) is provided at an easily accessible place in the vehicle, wherein the means for releasing the two locks (1) are connected by at least one cable (3) to the additional actuating device (4) and the additional actuating device (4) comprises a device for length and/or force compensation wherein the cable connection is actuated so that when the additional device (4) is operated both belt locks (1) are opened irrespective of the fact that different travel distances and/or forces are required for operating the respective release devices.

2. A seat-belt system for a vehicle according to claim 1, **characterised in that** the additional actuating device (4) comprises a lever (5) which when deflected moves a cable (3) having one end connected to a release device and in the form of a length and/or force compensating means guided in the additional actuating device (4) via a roller (11) mounted for rotation in a connecting slide (8), wherein the connecting slide (8) transmits the motion of the lever (5) to the roller (11).

3. A seat-belt system for a motor vehicle according to claim 1, **characterised in that** the additional actuating device (4) comprises a lever (5) which when deflected moves two cables (3), each of which leads from the additional actuating device (4) to a release device and the ends of which, near the release device, compensate length and forces and are connected in the additional actuating device (4) by a coupling (12) which can be pivoted at least by the actuating lever (5) and moved at least in a straight line.

4. A seat-belt system for a motor vehicle according to any of claims 1 to 3, **characterised in that** the additional actuating device (4) comprises a return spring (10), wherein the connecting slide (8) or the coupling (12) is moved by the lever (5) against the force of the return spring (10).

5. A seat-belt system for a motor vehicle according to any of claims 1 to 4, **characterised in that** an additional device for length and/or force compensation is disposed between the actuating lever (5) and the means for releasing the belt locks (1) and comprises at least one resilient element under tension, especially a tension spring.
